**Europäisches Patentamt**

**European Patent Office**

**Office européen des brevets**

(19)

(11) Veröffentlichungsnummer: **0 235 587**
**A2**

(12) **EUROPÄISCHE PATENTANMELDUNG**

(21) Anmeldenummer: **87101335.5**

(22) Anmeldetag: **31.01.87**

(51) Int. Cl.⁴: **H 04 N 5/18**

(30) Priorität: **05.03.86 DE 3607164**

(43) Veröffentlichungstag der Anmeldung: **09.09.87**
**Patentblatt 87/37**

(84) Benannte Vertragsstaaten: **DE FR GB IT**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Rehak, Manfred c/o Grundig E.M.V., Max Grundig holländ. Stiftung & Co KG, Kurgartenstrasse 37 D-8510 Fürth/Bay. (DE)**
Erfinder: **Spörl, Manfred c/o Grundig E.M.V., Max Grundig holländ. Stiftung & Co KG, Kurgartenstrasse 37 D-8510 Fürth/Bay. (DE)**

(54) **Schaltung zur Kompensation der durch ein Verwischungssignal hervorgerufenen Störungen in Satelliten-Fernsehempfängern.**

(57) Bei der Satellitenübertragung von Fernsehsignalen wird dem zu übertragenden Signal vor der Frequenzmodulation ein sog. Verwischungssignal überlagert. Dieses Verwischungssignal verursacht im Satelliten-Fernsehempfänger unerwünschte Helligkeitsänderungen und Störungen bei der Synchronisierung. Diese werden nach der vorliegenden Erfindung vermieden, indem aus den Synchronsignalspitzen des demodulierten Satelliten-Fernsehsignals eine analoge Regelspannung gewonnen und dem störbehafteten Signal hinzuaddiert wird. Die Abtastung der Synchronsignalspitzen erfolgt in einem Zeitintervall, dessen Dauer höchstens gleich der Dauer der Vor- bzw. Nachtrabanten des Videosignals ist. Damit können auch während der vertikalen Austastlücke korrekte, die Amplitude des Verwischungssignals kennzeichnende Abtastwerte gewonnen werden.

- 1 -

SCHALTUNG ZUR KOMPENSATION DER
DURCH EIN VERWISCHUNGSSIGNAL
HERVORGERUFENEN STÖRUNGEN IN
SATELLITEN-FERNSEHEMPFÄNGERN

## Beschreibung

Die vorliegende Erfindung betrifft eine Schaltung zur
Kompensation der durch ein Verwischungssignal hervorgerufenen Störungen in Satelliten-Fernsehempfängern mit
den im Oberbegriff des Anspruchs 1 angegebenen Merkmalen.

Bei bandbegrenzten frequenzmodulierten Übertragungssystemen wie der Übertragung von Fernsehsignalen über
Satelliten wird dem zu übertragenden Fernsehsignal vor
der Frequenzmodulation eine bildfrequente Dreieckspannung
additiv überlagert. Diese bildfrequente Dreieckspannung
wird als Verwischungssignal bezeichnet und hat die Aufgabe,
das Entstehen diskreter stationärer Spektralfrequenzen
und damit die Konzentration der gesamten Energie des FM-
Trägers auf einer einzigen Frequenz zu vermeiden, da

- 2-

ansonsten in nachfolgenden Schaltungen Übersteuerungen
und Intermodulationen auftreten würden.

In Satelliten-Fernsehempfängern ruft dieses Verwischungssignal Störungen hervor, da es dem demodulierten Videosignal additiv überlagert ist, was eine unerwünschte Verschiebung des Gleichspannungspegels bedeutet. Dies führt
zu Problemen bei der Synchronisierung und zu Bildfehlern
in Form von unerwünschten Helligkeitsänderungen in horizontaler
und vertikaler Richtung.

Zur Verminderung der durch das Verwischungssignal hervorgerufenen Störungen werden üblicherweise Klemmschaltungen
verwendet, mittels welcher der Austastpegel des Videosignals
auf einen gewünschten Wert geklemmt wird. Mittels solcher
Klemmschaltungen können die genannten Störungen aber nur teilweise beseitigt werden. Insbesondere bleiben unerwünschte
Helligkeitsänderungen in horizontaler Richtung ebenso bestehen wie Probleme bei der Vertikalsynchronisierung, da
zum einen bekannte Klemmschaltungen während der aktiven
Zeilenzeit nicht aktiv sind und zum anderen während der
vertikalen Austastlücken kein korrektes, die Amplitude des
Verwischungssignals kennzeichnendes Steuersignal zur Verfügung
steht.

Ferner ist aus der DE-AS 22 17 938 eine am Eingang eines
Fernsehsenders angeordnete Klemmschaltung für ein Fernseh-
Videosignal bekannt. Diese bekannte Schaltung weist eine Gegenkopplungsschleife auf, in welcher das Signal zunächst demoduliert und zeilenfrequent während der hinteren Schwarzschulter abgetastet wird. Diese Abtastung liefert amplitudenmodulierte Impulse, welche die Schwankungen des Austastpegels darstellen. Die erhaltenen Impulse werden in der Polarität umgekehrt, impulsdauerumgesetzt (d. h. verlängert), verstärkt und integriert. Das durch Integration erhaltene kontinuierliche Signal wird erneut abgetastet und das erhaltene Abtastsignal dem Eingangssignal der Schaltung zugeführt, um den Austastpegel des Videosignals auf einen gewünschten Wert zu klemmen. Weiterhin ist aus der DE-AS 22 17 938 eine Schaltung bekannt, bei der das demodulierte Signal zeilenfrequent während der hinteren Schwarzschulter abgetastet, in der Polarität umgekehrt, verstärkt, integriert und das so erhaltene Signal dem Eingangssignal überlagert wird.

Demgegenüber liegt der vorliegenden Erfindung die Aufgabe zugrunde, eine Schaltung der im Oberbegriff des Anspruchs 1 angegebenen Art derart weiterzubilden, daß das dem Videosignal überlagerte Verwischungssignal derart kompensiert wird, daß im wiedergegebenen Bild keine unerwünschten Helligkeitsänderungen in horizontaler Richtung und auch keinerlei Probleme bei der Vertikalsynchronisierung auftreten.

- 4 -

Diese Aufgabe wird durch die im kennzeichnenden Teil des Patentanspruchs 1 angegebenen Merkmale gelöst. Vorteilhafte Weiterbildungen ergeben sich aus den Unteransprüchen.

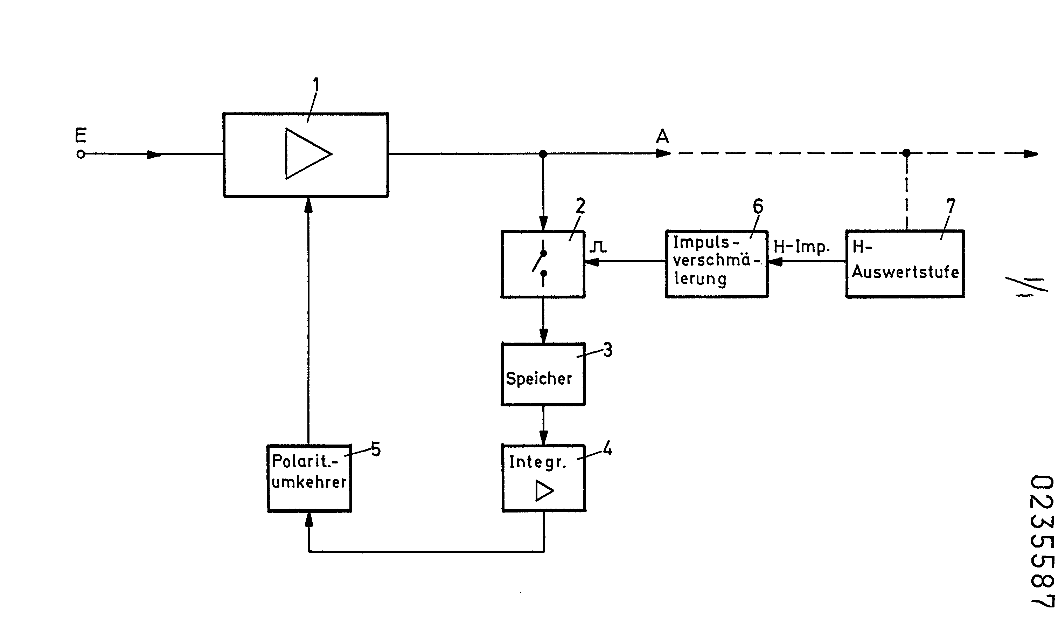

Die Vorteile der Erfindung liegen insbesondere darin, daß die durch das Verwischungssignal hervorgerufenen Störungen weitestgehend kompensiert werden, ohne daß die Vertikalsynchronisierung gestört wird. Weitere vorteilhafte Eigenschaften der beanspruchten Schaltung ergeben sich aus einem Ausführungsbeispiel, welches im folgenden anhand der Figur näher erläutert wird.

Dem Eingang E der in der Figur gezeigten Schaltung wird ein demoduliertes Satelliten-Fernsehsignal zugeführt, welches von einem Verwischungssignal überlagert ist. Dieses Signal wird in einem Verstärker 1 verstärkt. Das Ausgangssignal des Verstärkers 1 gelangt an den Ausgang A der Schaltung, an den beispielsweise weitere signalverarbeitenden Stufen des Satelliten-Fernsehempfängers oder auch ein Videorecorder zur Aufzeichnung des Signals angeschlossen sein kann. Ferner wird das Ausgangssignal des Verstärkers 1 einem Schalter 2 zugeführt, der von horizontalfrequenten Tastimpulsen jeweils während der Zeitintervalle, in denen die Synchronsignalspitzenwerte des Synchronsignalgemisches auftreten, geschlossen wird, und ansonsten geöffnet ist.

Die horizontalfrequenten Tastimpulse werden aus den aus der Horizontalauswertestufe 7 des Satelliten-Fernsehempfängers abgeleiteten Horizontalsynchronimpulsen mittels einer Schaltung 6 zur Impulsverschmälerung gewonnen. Die Schaltung 6 zur Impulsverschmälerung reduziert die Dauer der Horizontalsynchronimpulse derart, daß sie höchstens gleich der Dauer der Vor- bzw. Nachtrabanten im Synchronsignalgemisch des Videosignals ist. Damit wird erreicht, daß auch in der vertikalen Austastlücke des Videosignals durch Abtastung der Spitzenwerte der Vor- bzw. Nachtrabanten ein Wert gewonnen wird, welcher korrekt Auskunft über die Amplitude des Verwischungssignals während der vertikalen Austastlücke gibt. Die abgetasteten Signalspitzenwerte werden in einem Speicher 3 abgespeichert. Das Ausgangssignal des Speichers 3 wird einem integrierenden Verstärker 4 zugeführt, in dem aus den abgetasteten Werten ein kontinuierliches Signal gewonnen wird. Dieses kontinuierliche Signal wird einer Stufe 5 zum Umkehren der Polarität zugeführt. Das der Stufe 5 entnommene Signal wird schließlich dem Eingangssignal des Verstärkers 1 additiv zugesetzt.

In der Praxis kann der integrierende Verstärker 4 und die Stufe 5 zum Umkehren der Polarität zu einem Bauteil zusammengefaßt und als Operationsverstärker ausgebildet sein. Wegen dessen hoher Verstärkung (60 bis 80 dB) werden durch das additive Zusetzen des aus den Synchronsignalspitzenwerten durch Integration und Polaritätsumkehr ermittelten kontinuierlichen Signals zum Eingangssignal des Verstärkers 2 die durch das Verwischungssignal hervorgerufenen
Störungen um den Faktor der Verstärkung des Operationsverstärkers reduziert. Damit treten im wiedergegebenen
Bild auch in horizontaler Richtung keine unerwünschten
Helligkeitsänderungen mehr auf. Ferner wird in vorteilhafter Weise der Arbeitspunkt der Gesamtschaltung
stabilisiert bzw. am Ausgang A der Schaltung ein konstantes,
störbefreites Videosignal erreicht. Durch die spezielle
Wahl der Dauer der Tastimpulse werden auch während der
vertikalen Austastlücken korrekte, die Amplitude des Verwischungssignals kennzeichnende Abtastwerte gewonnen und
damit Störungen bei der Vertikalsynchronisierung vermieden.

|

SCHALTUNG ZUR KOMPENSATION DER
DURCH EIN VERWISCHUNGSSIGNAL
HERVORGERUFENEN STÖRUNGEN IN
SATELLITEN-FERNSEHEMPFÄNGERN


Patentansprüche
―――――――


1. Schaltung zur Kompensation der durch ein Verwischungssignal hervorgerufenen Störungen in Satelliten-
Fernsehempfängern mit

- einem Verstärker, dessen Eingang ein demoduliertes
  Videosignal und ein dem Videosignal überlagertes Verwischungssignal zugeführt werden,

- einem mit dem Ausgang des Verstärkers verbundenen
  Schalter, der durch Tastimpulse während der Horizontalaustastintervalle des Videosignals geschlossen wird,

- einem Speicher zur Abspeicherung der abgetasteten
  Signalwerte,

- 2 -

- einem integrierenden Verstärker zur Erzeugung eines
  kontinuierlichen Signals aus den gespeicherten Abtastwerten und

- einer Stufe zum Umkehren der Polarität des vom integrierenden Verstärker erzeugten kontinuierlichen
  Signals,

d a d u r c h   g e k e n n z e i c h n e t ,

- daß die Dauer der Tastimpulse höchstens gleich der
  Dauer der Vor- bzw. Nachtrabanten im Synchronsignalgemisch des Videosignals ist,

- daß der Zeitpunkt des Auftretens der Tastimpulse derart gewählt ist, daß die Synchronsignalspitzenwerte
  des Synchronsignalgemisches abgetastet werden, und

- daß das aus den Synchronsignalspitzenwerten durch
  Integration und Polaritätsumkehr ermittelte kontinuierliche
  Signal dem Eingangssignal des Verstärkers additiv zugesetzt wird. .

2. Schaltung nach Anspruch 1, d a d u r c h   g e -
k e n n z e i c h n e t , daß die Tastimpulse durch Verschmälerung der aus der Horizontalauswertestufe des Satelliten-
Fernsehempfängers abgeleiteten Horizontalsynchronimpulse gewonnen werden.

3. Schaltung nach Anspruch 1 oder 2, d a d u r c h
g e k e n n z e i c h n e t ,  daß der integrierende Verstärker und die Stufe zum Umkehren der Polarität zusammengefaßt und als Operationsverstärker ausgebildet sind.

0235587

1/1

H-Auswertstufe 7

H-Imp.

Impuls-verschmä-lerung 6

A

2

Speicher 3

Integr. 4

Polarit.-umkehrer 5

E